# EUROPEAN PATENT SPECIFICATION

(11) **EP 2 914 068 B1**
(45) Date of publication and mention of the grant of the patent: **21.03.2018**
(21) Application number: 14180123.3
(22) Date of filing: 07.08.2014
(51) Int. Cl.: H05B 37/02

(54) **Electronic transformer-controlled two-wire two-way LED (light-emitting diode) lamp string**
Elektronische transformatorgesteuerte zweiadrige bidirektionale LED-Lichterkette
Cordon de lampe DEL bidirectionnelle bifilaire -contrôlée par transformateur électronique (diode électroluminescente)

(30) Priority: 28.02.2014 CN 201420089147 U
(43) Date of publication of application: 02.09.2015
(73) Proprietor: Zhejiang Sungiant arts and crafts Co., Ltd., Taizhou, Zhejiang (CN)
(72) Inventor: ZENG, Lingkang, Suining Hunan (CN)
(74) Representative: Sun, Yiming

(56) References cited:
- EP-A1- 2 391 188
- WO-A1-03/056878
- WO-A1-2010/085882
- CN-A- 101 893 167
- CN-U- 203 722 888
- CN-U- 203 761 651
- US-A1- 2011 057 572
- US-A1- 2012 019 156

## Description

### FIELD OF THE INVENTION

The Invention belongs to the technical field of LED (light-emitting diode) lamp strings, and particularly discloses an electronic transformer-controlled two-wire two-way LED lamp string.

### BACKGROUND OF THE INVENTION

The working principle of an electronic transformer is exactly similar with that of a stabilized switching power supply, and the electronic transformer is actually an alternating-current inverter. An alternating current is changed into a pulse direct current at first, and then a high-frequency oscillator is composed of electric components and used for changing the direct current into a high-frequency alternating current, then the needed high-frequency alternating current is output by the electronic transformer, and then secondary and rectification filter is carried out to obtain a low-voltage direct current. With the rapid development of social economy, LEDs are more and more common in use as a powerful tool for advertisement, decoration and beautification, and have already become an indispensable bright scenery line for enterprise mark promotion and city beautification. The traditional LED lamp string is provided with five wires, and is high in the consumption of wires, thus increasing the production cost.

### SUMMARY OF THE INVENTION

Aiming at the above problems existing in the prior art, the invention aims at designing and providing a technical scheme of an electronic transformer-controlled two-wire two-way LED lamp string which is high in reliability and high in safety, wherein the chip thereof adopts an off-time control mode, and an error amplifier is not required; the electronic transformer-controlled two-wire two-way LED lamp string is high in constant-current and constant-voltage accuracy, integrates various protection functions of over-voltage protection, over-current protection and over-load protection, can also be automatically restarted, and is high in reliability and high in safety.

The electronic transformer-controlled two-wire two-way LED lamp string is characterized by comprising a control box, wherein a plug is arranged on the control box, an electronic controller is arranged in the control box, and two wires are output from the electronic controller and connected with the LED lamp string; the electronic controller comprises an alternating-current power supply, a full-bridge rectification circuit, a filter circuit, a step-down output circuit and an output function control circuit, wherein the step-down output circuit comprises a single chip IC1 and a transformer T1, the pin 1 of the single chip IC1 is connected with a circuit ground GND, the pin 2 of the single chip IC1 is connected with one end of a resistor R2 and the collector of a triode Q1, the pin 3 of the single chip IC1 is connected with the base of the triode Q1, the pin 4 of the single chip IC1 is connected with one end of each of a resistor R3 and a resistor R4, the pin 5 of the single chip IC1 is connected with one end of a capacitor C4, and the pin 6 of the single chip IC1 is connected with the positive pole of a capacitor C3; the negative pole of the capacitor C3 is connected with the circuit ground GND; the other end of the capacitor C4 is connected with the other end of the resistor R4 and connected with the circuit ground GND; the other end of the resistor R3 is connected with one end of a diode D6, and the other end of the diode D6 is connected with the positive pole of the capacitor C3; the other end of the resistor R2 is connected with the circuit ground GND; one end of a resistor R1 is connected with the positive pole of the capacitor C3, and the other end of the resistor R1 is connected with the positive pole of a capacitor C2; one end of a resistor R7 is connected with the positive pole of the capacitor C2 and one end of a capacitor C7; the other end of the resistor R7 is connected with the other end of the capacitor C7 and one end of a diode D5, the other end of the diode D5 is connected with one end of the primary coil of the transformer T1, and the other end of the primary coil of the transformer T1 is connected with the capacitor C7; one end of the first secondary coil of the transformer T1 is connected with one end of a diode D7, and the other end of the diode D7 is connected with the positive pole of a capacitor C5; the other end of the first secondary coil of the transformer T1 is connected with the negative pole of the capacitor C5; one end of the second secondary coil of the transformer T1 is connected with one end of a capacitor CY1 and the circuit ground GND, and the other end of the capacitor CY1 is connected with the negative pole of the capacitor C5 and the circuit ground GND; the other end of the second secondary coil of the transformer T1 is connected with one end of a diode D6;

the output function control circuit comprises single chips IC2 and IC3, the pins 1-4 and 7 of the single chip IC3 are connected with the circuit ground GND, the pin 5 of the single chip IC3 is connected with the pin 5 of the single chip IC2, the pin 6 of the single chip IC3 is connected with the pin 6 of the single chip IC2, the pin 8 of the single chip IC3 is connected with one end of a resistor R16 and the pin 1 of the single chip IC2, and the other end of the resistor R16 is connected with the pin 5 of the single chip IC2; the pin 8 of the single chip IC2 is connected with the circuit ground GND, the pin 2 of the single chip IC2 is connected with one end of a resistor R10, the pin 3 of the single chip IC2 is connected with one end of a resistor R12, the pin 4 of the single chip IC2 is connected with one end of a key switch S and one end of a resistor R14, the other end of the resistor R10 is connected with the base of a triode Q4, the emitter of the triode Q4 is connected with the circuit ground GND, the collector of the triode Q4 is connected with the collector of the triode Q2, the other end of the resistor R12 is connected with the base of a triode Q3, the emitter of the triode Q3 is connected with the circuit ground GND, the collector of the triode Q3 is connected with the collector of the triode Q1, the collector of the triode Q1 is connected with one end of a resistor R8, the other end of the resistor R8 is connected with the cathode of a voltage-stabilizing diode ZD1, the cathode of the voltage-stabilizing diode ZD1 is connected with the circuit ground GND and the positive pole of a capacitor C6, and the negative pole of the capacitor C6 is connected with the circuit ground GND; the emitter of the triode Q1 is connected with the emitter of a triode Q2, the base of the triode Q1 is connected with one end of a resistor R11, the other end of the resistor R11 is connected with the collector of the triode Q4 and connected with a first interface, the base of the triode Q2 is connected with one end of a resistor R13, and the other end of the resistor R13 is connected with the collector of the triode Q3 and connected with a second interface.

The electronic transformer-controlled two-wire two-way LED lamp string is characterized in that the full-bridge rectification circuit is formed by connecting four silicon rectification diodes D1-D4, the live line end L and the null line end N of a 100 V-240 V alternating-current power supply are connected to the alternating-current input end of the full-bridge rectification circuit composed of the four silicon rectification diodes D1-D4, the positive pole of the direct-current output end of the full-bridge rectification circuit is connected with the positive pole of the circuit, and the negative pole of the output end of the full-bridge rectification circuit is connected with the circuit ground GND.

The electronic transformer-controlled two-wire two-way LED lamp string is characterized in that the filter circuit is composed of the capacitor C1, a reactor L1 and the capacitor C2, the positive pole of the capacitor C1 and the incoming terminal of the reactor L1 are connected with the positive pole of the direct-current output end of the full-bridge rectification circuit, the negative pole of the capacitor C1 is connected with the circuit ground GND, the outgoing end of the reactor L1 is connected with the positive pole of the capacitor C2, and the negative pole of the capacitor C2 is connected with the circuit ground GND.

The electronic transformer-controlled two-wire two-way LED lamp string is characterized in that the LED lamp string is formed by connecting a group of LED branch circuits in parallel, and each group of the LED branch circuits is provided with one LED.

The electronic transformer-controlled two-wire two-way LED lamp string is characterized in that the LED lamp string is formed by connecting a group of LED branch circuits in series, and each group of the LED branch circuits is composed of a group of parallel LEDs.

The electronic transformer-controlled two-wire two-way LED lamp string is characterized in that a thermistor F1 is connected to the live line end L of the alternating-current power supply and the alternating-current input end of the full-bridge rectification circuit.

The single chip IC1 is a DEF28-type chip and can be directly bought on the market.

The single chip IC2 is a D&P3DC7-type chip and can be directly bought on the market.

The single chip IC3 is a D&PH7240-type chip and can be directly bought on the market.

According to the electronic transformer-controlled two-wire two-way LED lamp string, the chip thereof adopts an off-time control mode, and an error amplifier is not required; the electronic transformer-controlled two-wire two-way LED lamp string is high in constant-current and constant-voltage accuracy, and integrates various protection functions of over-voltage protection, over-current protection and over-load protection, can also be automatically restarted, and is high in reliability and high in safety.

### BRIEF DESCRIPTION OF THE DRAWINGS

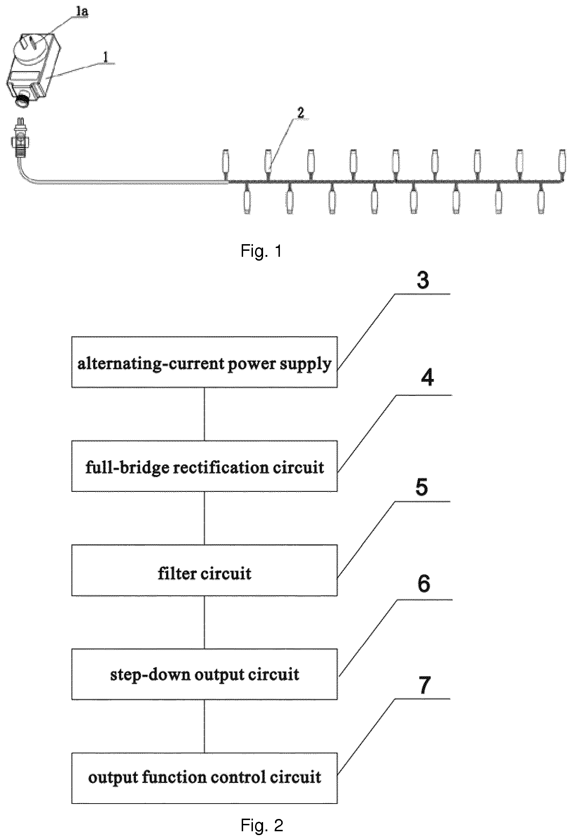

Fig. 1 is a structural schematic diagram of the electronic transformer-controlled two-wire two-way LED lamp string provided by the invention;
Fig. 2 is a circuit structure block diagram of the electronic transformer-controlled two-wire two-way LED lamp string provided by the invention;
Fig. 3 is a circuit principle diagram of the electronic transformer-controlled two-wire two-way LED lamp string provided by the invention;

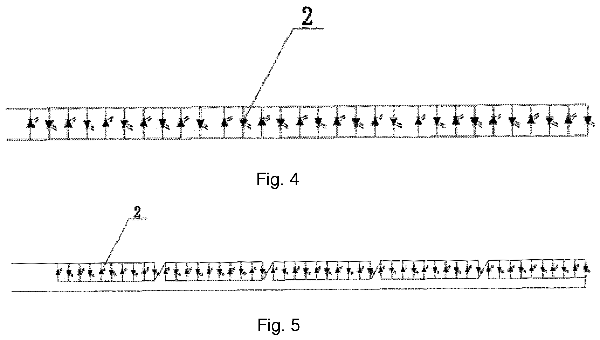

Fig. 4 is a circuit diagram of the two-wire two-way LED lamp string provided with 10-100 lamps;
Fig. 5 is a circuit diagram of the two-wire two-way LED lamp string provided with 100-1000 lamps;
Fig. 6 is the equivalent circuit diagram of Fig. 3;
Fig. 7 is the equivalent circuit diagram of Fig. 3;
Fig. 8 is the equivalent circuit diagram of Fig. 3;

In the figures, 1 represents the control box, 1a represents the plug, 2 represents the LED lamp string, 3 represents the alternating-current power supply, 4 represents the full-bridge rectification circuit, 5 represents the filter circuit, 6 represents the step-down output circuit, and 7 represents the output function control circuit.

### DETAILED DESCRIPTION OF THE EMBODIMENTS

The electronic transformer-controlled two-wire two-way LED lamp string provided by the invention is further illustrated in conjunction with the accompanying drawings of description.

As shown in the figures, the electronic transformer-controlled two-wire two-way LED lamp string comprises a control box 1, wherein a plug 1a is arranged on the control box 1, an electronic controller is arranged in the control box 1, and two wires are output from the electronic controller and connected with the LED lamp string 2;
the electronic controller comprises an alternating-current power supply 3, a full-bridge rectification circuit 4, a filter circuit 5, a step-down output circuit 6 and an output function control circuit 7, wherein the step-down output circuit 6 comprises a single chip IC1 and a transformer T1, the pin 1 of the single chip IC1 is connected with a circuit ground GND, the pin 2 of the single chip IC1 is connected with one end of a resistor R2 and the collector of a triode Q1, the pin 3 of the single chip IC1 is connected with the base of the triode Q1, the pin 4 of the single chip IC1 is connected with one end of each of a resistor R3 and a resistor R4, the pin 5 of the single chip IC1 is connected with one end of a capacitor C4, and the pin 6 of the single chip IC1 is connected with the positive pole of a capacitor C3; the negative pole of the capacitor C3 is connected with the circuit ground GND; the other end of the capacitor C4 is connected with the other end of the resistor R4 and connected with the circuit ground GND; the other end of the resistor R3 is connected with one end of a diode D6, and the other end of the diode D6 is connected with the positive pole of the capacitor C3; the other end of the resistor R2 is connected with the circuit ground GND; one end of a resistor R1 is connected with the positive pole of the capacitor C3, and the other end of the resistor R1 is connected with the positive pole of a capacitor C2; one end of a resistor R7 is connected with the positive pole of the capacitor C2 and one end of a capacitor C7; the other end of the resistor R7 is connected with the other end of the capacitor C7 and one end of a diode D5, the other end of the diode D5 is connected with one end of the primary coil of the transformer T1, and the other end of the primary coil of the transformer T1 is connected with the capacitor C7; one end of the first secondary coil of the transformer T1 is connected with one end of a diode D7, and the other end of the diode D7 is connected with the positive pole of a capacitor C5; the other end of the first secondary coil of the transformer T1 is connected with the negative pole of the capacitor C5; one end of the second secondary coil of the transformer T1 is connected with one end of a capacitor CY1 and the circuit ground GND, and the other end of the capacitor CY1 is connected with the negative pole of the capacitor C5 and the circuit ground GND; the other end of the second secondary coil of the transformer T1 is connected with one end of a diode D6;
the output function control circuit 7 comprises single chips IC2 and IC3, the pins 1-4 and 7 of the single chip IC3 are connected with the circuit ground GND, the pin 5 of the single chip IC3 is connected with the pin 5 of the single chip IC2, the pin 6 of the single chip IC3 is connected with the pin 6 of the single chip IC2, the pin 8 of the single chip IC3 is connected with one end of a resistor R16 and the pin 1 of the single chip IC2, and the other end of the resistor R16 is connected with the pin 5 of the single chip IC2; the pin 8 of the single chip IC2 is connected with the circuit ground GND, the pin 2 of the single chip IC2 is connected with one end of a resistor R10, the pin 3 of the single chip IC2 is connected with one end of a resistor R12, the pin 4 of the single chip IC2 is connected with one end of a key switch S and one end of a resistor R14, the other end of the resistor R10 is connected with the base of a triode Q4, the emitter of the triode Q4 is connected with the circuit ground GND, the collector of the triode Q4 is connected with the collector of the triode Q2, the other end of the resistor R12 is connected with the base of a triode Q3, the emitter of the triode Q3 is connected with the circuit ground GND, the collector of the triode Q3 is connected with the collector of the triode Q1, the collector of the triode Q1 is connected with one end of a resistor R8, the other end of the resistor R8 is connected with the cathode of a voltage-stabilizing diode ZD1, the cathode of the voltage-stabilizing diode ZD1 is connected with the circuit ground GND and the positive pole of a capacitor C6, and the negative pole of the capacitor C6 is connected with the circuit ground GND; the emitter of the triode Q1 is connected with the emitter of a triode Q2, the base of the triode Q1 is connected with one end of a resistor R11, the other end of the resistor R11 is connected with the collector of the triode Q4 and connected with a first interface, the base of the triode Q2 is connected with one end of a resistor R13, and the other end of the resistor R13 is connected with the collector of the triode Q3 and connected with a second interface.

The full-bridge rectification circuit 4 is formed by connecting four silicon rectification diodes D1-D4, the live line end L and the null line end N of a 100 V-240 V alternating-current power supply are connected to the alternating-current input end of the full-bridge rectification circuit composed of the four silicon rectification diodes D1-D4, the positive pole of the direct-current output end of the full-bridge rectification circuit is connected with the positive pole of the circuit, and the negative pole of the output end of the full-bridge rectification circuit is connected with the circuit ground GND. A thermistor F1 is connected to the live line end L of the alternating-current power supply 3 and the alternating-current input end of the full-bridge rectification circuit.

The filter circuit 5 is composed of the capacitor C1, a reactor L1 and the capacitor C2, the positive pole of the capacitor C1 and the incoming terminal of the reactor L1 are connected with the positive pole of the direct-current output end of the full-bridge rectification circuit, the negative pole of the capacitor C1 is connected with the circuit ground GND, the outgoing end of the reactor L1 is connected with the positive pole of the capacitor C2, and the negative pole of the capacitor C2 is connected with the circuit ground GND. The thermistor F1 is fused in the case that a set current is exceeded, so as to play a short-circuit protection role. The full-bridge rectification circuit 4 and the filter circuit 5 are capable of filtering off the clutters of the alternating-current power supply, smoothing the direct current output after rectification, playing a role of interfering the clutters of the alternating-current power supply by an internal circuit, and achieving a good EMC (electro magnetic compatibility) effect.

A 60 kHz pulse is output by the single chip IC1 to push the high-frequency transformer to carry out step-down output, the resistor R1 is a starting resistor, the capacitor C3 charges due to a small starting current, after the voltage of the capacitor C3 rises so that the single chip IC1 can start, the small starting current is out of action, and then the power of the single chip IC1 is provided by a positive feedback winding. The resistors R3 and R4 form a feedback sampling voltage to control the stability of the output voltage, the value of the resistor R2 is the maximum value of primary-side current control, and the maximum power for controlling variable-voltage output is achieved. The triode Q1 is a switching pulse power-amplifier tube, the diode D6 is used for isolating the influence of the starting current on sampling, the diode D5, the resistor R7 and the capacitor C7 are negative peak absorption circuits, and the diode D7 and the capacitor C5 are used for output rectification filter. The capacitor CY1 plays a role of input and output coupling for the transformer T1, thus improving stability. The whole working process is as follows: firstly, when electrifying is just carried out, the single chip IC1 is started through the resistor R1, secondly, the triode Q1 is conducted, thirdly, a top-positive and bottom-negative current is generated by the transformer T1, fourthly, the top-positive and bottom-negative current is induced by the secondary side of the transformer T1, fifthly, the capacitor C5 is charged by the diode D7, sixthly, when the triode Q1 is switched off, a load is supplied with power by the capacitor C5, meanwhile, a top-negative and bottom-positive current is generated by the feeding winding, and supplied for voltage sampling and power supply for the single chip IC1, and finally, the cycle is infinitely carried out so as to generate voltage-stabilized constant-power output.

The output function control circuit is a two-wire two-way eight-function circuit composed of the single chip IC2, the resistor R14, the key switch S, the resistor R16, the resistor R10, the resistor R12, the resistor R11, the resistor R13, the triode Q1, the triode Q2, the triode Q3 and the triode Q4. A power failure memory function is formed by the single chip IC3. A step-down voltage-stabilizing circuit is composed of the resistor R8, the capacitor C6 and the voltage-stabilizing diode ZD1, so as to provide the stable +5V power supply for the single chips IC2 and IC3. The lamp string loads a direct-current 30 V power supply.

The circuits of the lamp string are combined in a mode of connecting a plurality of the circuits in parallel and then connecting the circuits in series, electric wires can be saved by 50-60% for 10-100 lamps, the LED lamp string 2 is formed by connecting a group of LED branch circuits in parallel, and each group of the LED branch circuits is provided with an LED

According to the circuits of the lamp string, electric wires can be saved by 40-50% for 100-1000 lamps, the LED lamp string 2 is formed by connecting a group of LED branch circuits in series, and each group of the LED branch circuits is composed of a group of parallel LEDs.

The electronic transformer is applied to a loaded lamp string capable of inputting a 100 V-240 V alternating-current power supply and outputting a 31 V direct-current load, and with a power of not greater than 7.2 W, and has the functions of short-circuit protection, over-current protection and electricity saving. The maximum output power of the electronic transformer is 7.2 W, a secondary control circuit and a photocoupler are omitted in primary-side switch control, the constant-voltage accuracy is +/-5%, and the constant-current accuracy is +/-5%, various protection functions (over-current protection, over-load protection, over-voltage protection and the like) are integrated, and automatic restart can be realized, thus increasing conversion efficiency; the reliability is higher; the requirements of Energy Star 2.0 are completely met; the no-load power consumption is less than 150 mW; the following standards are easily met: EN55022 Class B EMI (8 dB margin); IEC61000-4-5 Class 3 alternating-current surge and ESD (15 kV); the safety requirements of an earth leakage current of less than 5 muA are met; the small electronic transformer with a control function is internally provided, two-wire two-way eight-function output is achieved, and a power failure memory function is provided.

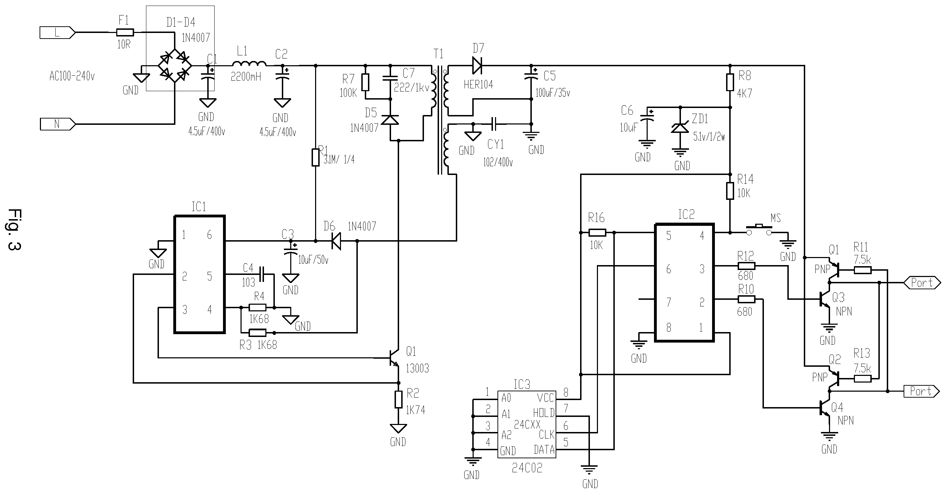

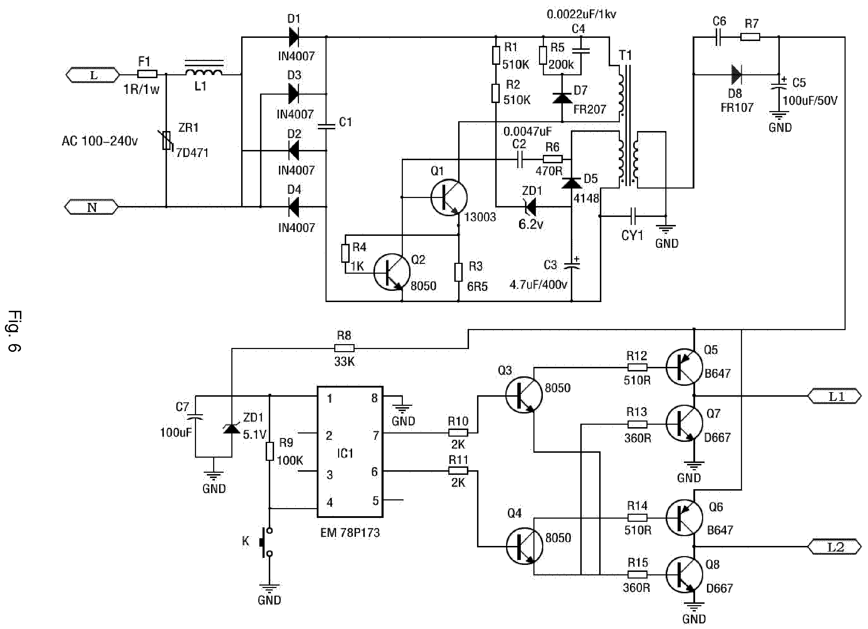

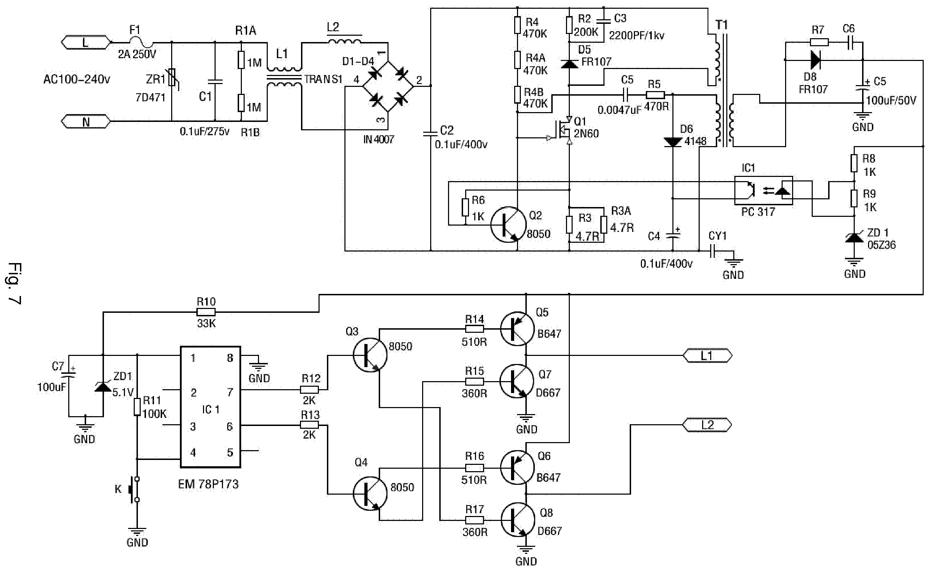

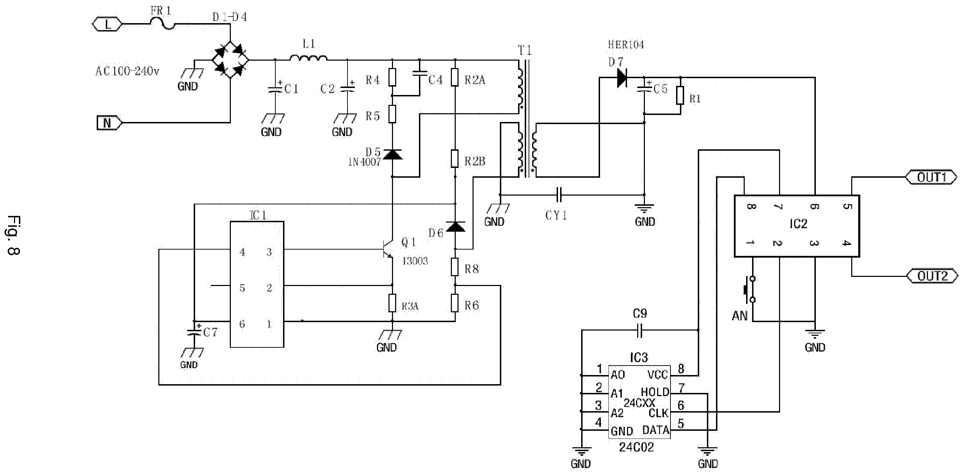

Of course, the circuit principle diagram of the invention shown in Fig. 3 can also be replaced by the circuit diagram shown in Fig. 6, Fig. 7 and Fig. 8, the circuit diagram shown in Fig.6, Fig. 7 and Fig. 8 also includes the alternating-current power supply, the full-bridge rectification circuit, the filter circuit, step-down output circuit and output function control circuit.

## Claims

1. An electronic transformer-controlled LED lamp system comprising a control box (100) and a two-wire LED lamp string (200), wherein a plug (100a) is arranged on the control box (100), an electronic controller is arranged in the control box (100), and two wires are output from the electronic controller and connected with said LED lamp string (200);
the electronic controller comprises an alternating-current power supply (300), a full-bridge rectification circuit (400), a filter circuit (500), a step-down output circuit (600) and an output function control circuit (700),
wherein the step-down output circuit (600) comprises a first single chip (IC1) and a transformer (T1), a first pin (1) of the first single chip (IC1) is connected with a circuit ground (GND), a second pin (2) of the first single chip (IC1) is connected with one end of a first resistor (R2) and an emitter of a first triode (Q1), a third pin (3) of the first single chip (IC1) is connected with the base of the first triode (Q1), a fifth pin (5) of the first single chip (IC1) is connected with one end of a first capacitor (C4), and a sixth pin (6) of the first single chip (IC1) is connected with the positive pole of a second capacitor (C3); the negative pole of the second capacitor (C3) is connected with the circuit ground (GND); and a cathode of a first diode (D6) is connected with the positive pole of the second capacitor (C3); the other end of the first resistor (R2) is connected with the circuit ground (GND); one end of a second resistor (R1) is connected with the positive pole of the second capacitor (C3), an anode of a second diode (D5) is connected with one end of a primary coil of the transformer (T1), a first end of a second secondary coil of the transformer (T1) is connected with an anode of said first diode (D6);
the output function control circuit (700) comprises a second single chip (IC2), wherein one end of a third resistor (R16) is connected with a fifth pin (5) of the second single chip (IC2); an eighth pin (8) of the second single chip (IC2) is connected with the circuit ground (GND),
**characterized in that**
said LED lamp string (200) is a two-way LED lamp string; and whererin the electronic transformer-controlled LED lamp system further comprises a fourth pin (4) of said first single chip (IC1) is connected with one end of each of a fourth resistor (R3) and a fifth resistor (R4); another end of said first capacitor (C4) is connected with another end of said fifth resistor (R4) and connected with said circuit ground (GND); another end of said fourth resistor (R3) is connected with said anode of said first diode (D6);
another end of said second resistor (R1) is connected with a positive pole of a third capacitor (C2); one end of a sixth resistor (R7) is connected with a positive pole of a third capacitor (C2) and one end of a fourth capacitor (C7); another end of said sixth resistor (R7) is connected with another end of said fourth capacitor (C7) and a cathode of said second diode (D5); another end of said primary coil of said transformer (T1) is connected with said fourth capacitor (C7);
one end of a first secondary coil of said transformer (T1) is connected with an anode of a third diode (D7), and a cathode of said third diode (D7) is connected with a positive pole of a fifth capacitor (C5); another end of said first secondary coil of said transformer (T1) is connected with a negative pole of said fifth capacitor (C5); a second end of said second secondary coil of said transformer (T1) is connected with one end of a sixth capacitor (CY1) and said circuit ground (GND), and another end of said sixth capacitor (CY1) is connected with said negative pole of said fifth capacitor (C5) and said circuit ground (GND);
wherein a second pin (2) of the second single chip (IC2) is connected with one end of a seventh resistor (R10), a third pin (3) of the second single chip (IC2) is connected with one end of an eighth resistor (R12), a fourth pin (4) of the second single chip (IC2) is connected with one end of a key switch (MS) and one end of a ninth resistor (R14), the other end of the seventh resistor (R10) is connected with the base of a fourth triode (Q4), the emitter of the fourth triode (Q4) is connected with the circuit ground (GND), the collector of the fourth triode (Q4) is connected with the collector of a second triode (Q2), the other end of the eighth resistor (R12) is connected with the base of a third triode (Q3), the emitter of the third triode (Q3) is connected with the circuit ground (GND), the collector of the third triode (Q3) is connected with the collector of the first triode (Q1), the emitter of the first triode (Q1) is connected with one end of a tenth resistor (R8);
wherein an other end of the tenth resistor (R8) is connected with the cathode of a voltage-stabilizing diode (ZD1) and a positive pole of a seventh capacitor (C6), the anode of the voltage-stabilizing diode (ZD1) is connected with the circuit ground (GND), and the negative pole of the seventh capacitor (C6) is connected with the circuit ground (GND);
wherein the emitter of the first triode (Q1) is connected with the emitter of the second triode (Q2), the base of the first triode (Q1) is connected with one end of an eleventh resistor (R11), the other end of the eleventh resistor (R 11) is connected with the collector of the fourth triode (Q4) and connected with a first interface (Port), the base of the second triode (Q2) is connected with one end of a twelfth resistor (R13), and another end of the twelfth resistor (R13) is connected with the collector of the third triode (Q3) and connected with a second interface (Port);
wherein the LED lamp string (200) is formed by connecting a group of LED branch circuits in parallel, and each group of the LED branch circuits is provided with one LED;
or wherein the LED lamp string (200) is formed by connecting a group of LED branch circuits in series, and each group of the LED branch circuits is composed of a group of parallel LEDs.

2. The electronic transformer-controlled two-wire LED lamp system of claim 1, wherein the output function control circuit (700) also comprises a third single chip (IC3), the first (1) to fourth (4) pins and the seventh pin (7) of the third single chip (IC3) are connected with the circuit ground (GND), the fifth pin (5) of the third single chip (IC3) is connected with the fifth pin (5) of the second single chip (IC2), the sixth pin (6) of the third single chip (IC3) is connected with the sixth pin (6) of the second single chip (IC2), the eighth pin (8) of the third single chip (IC3) is connected with the other end of the third resistor (R16) and the first pin (1) of the second single chip (IC2).

3. The electronic transformer-controlled two-wire LED lamp system of claim 1, wherein the full-bridge rectification circuit (400) is formed by connecting four silicon rectification diodes (D1-D4), the live line end (L) and the null line end (N) of a 100 V to 240 V alternating-current power supply are connected to the alternating-current input end of the full-bridge rectification circuit composed of the four silicon rectification diodes (D1-D4), the positive pole of the direct-current output end of the full-bridge rectification circuit is connected with the positive pole of the circuit, and the negative pole of the output end of the full-bridge rectification circuit is connected with the circuit ground (GND);
and wherein the filter circuit (5) is composed of the eighth capacitor (C1), a reactor (L1) and the third capacitor (C2), the positive pole of the eighth capacitor (C1) and the incoming terminal of the reactor (L1) are connected with the positive pole of the direct-current output end of the full-bridge rectification circuit, the negative pole of the eighth capacitor (C1) is connected with the circuit ground (GND), the outgoing end of the reactor (L1) is connected with the positive pole of the third capacitor (C2), and the negative pole of the third capacitor (C2) is connected with the circuit ground (GND).

4. The electronic transformer-controlled two-wire LED lamp system of claim 3, wherein a thermistor (F1) is connected to the live line end (L) of the alternating-current power supply (300) and the alternating-current input end of the full-bridge rectification circuit.

## Patentansprüche

1. Ein elektronisches transformatorgesteuertes LED-Lampensystem, das einen Steuerkasten (100) und eine zweidrähtige LED-Lampenkette (200) umfasst, wobei ein Stecker (100a) an dem Steuerkasten (100) angeordnet ist, eine elektronische Steuerung in dem Steuerkasten (100) angeordnet ist und zwei Drähte aus der elektronischen Steuerung herausgeführt und mit der LED-Lampenkette (200) verbunden sind;
die elektronische Steuerung umfasst eine Wechselstromversorgung (300), einen Vollbrücken-Gleichrichtungskreis (400), einen Filterkreis (500), einen Abwärts-Ausgabekreis (600) und einen Ausgabefunktionssteuerungskreis (700),
wobei der Abwärts-Ausgabekreis (600) einen ersten einzelnen Chip (IC1) und einen Transformator (T1) aufweist, ein erster Stift (1) des ersten einzelnen Chip (IC1) mit einer Schaltkreismasse (GND) verbunden ist, ein zweiter Stift (2) des ersten einzelnen Chip (IC1) mit einem Ende eines ersten Widerstands (R2) und einem Emitter einer ersten Triode (Q1) verbunden ist, ein dritter Stift (3) des ersten einzelnen Chip (IC1) mit der Basis der ersten Triode (Q1) verbunden ist, ein fünfter Stift (5) des ersten einzelnen Chip (IC1) mit einem Ende einer ersten Kapazität (C4) verbunden ist, und ein sechster Stift (6) des ersten einzelnen Chip (IC1) mit dem positiven Pol einer zweiten Kapazität (C3) verbunden ist; der negative Pol der zweiten Kapazität (C3) mit der Schaltkreismasse (GND) verbunden ist; und eine Kathode einer ersten Diode (D6) mit dem positiven Pol der zweiten Kapazität (C3) verbunden ist; das andere Ende des ersten Widerstands (R2) mit der Schaltkreismasse (GND) verbunden ist; ein Ende eines zweiten Widerstands (R1) mit dem positiven Pol der zweiten Kapazität (C3), eine Anode einer zweiten Diode (D5) mit einem Ende einer Primärspule des Transformators (T1) verbunden ist, ein erstes Ende einer zweiten Sekundärspule des Transformators (T1) mit einer Anode der ersten Diode (D6) verbunden ist;
der Ausgabefunktionssteuerungskreis (700) umfasst einen zweiten einzelnen Chip (IC2), wobei ein Ende eines dritten Widerstands (R16) mit einem fünften Stift (5) des zweiten einzelnen Chip (IC2) verbunden ist; ein achter Stift (8) des zweiten einzelnen Chip (IC2) mit der Schaltkreismasse (GND) verbunden ist,
**dadurch gekennzeichnet, dass**
die LED-Lampenkette (200) eine Zweiweg-LED-Lampenkette ist; und wobei das elektronische transformatorgesteuerte LED-Lampensystem des Weiteren umfasst;
dass ein vierter Stift (4) des ersten einzelnen Chip (IC1) verbunden ist mit je einem Ende sowohl von einem vierten Widerstand (R3) als auch von einem fünften Widerstand (R4); ein anderes Ende der ersten Kapazität (C4) verbunden ist mit einem anderen Ende des fünften Widerstands (R4) und verbunden ist mit der Schaltkreismasse (GND); ein anderes Ende des vierten Widerstands (R3) verbunden ist mit der Anode der ersten Diode (D6);
dass ein anderes Ende des zweiten Widerstands (R1) verbunden ist mit einem positiven Pol einer dritten Kapazität (C2); ein Ende eines sechsten Widerstands (R7) verbunden ist mit einem positiven Pol einer dritten Kapazität (C2) und einem Ende einer vierten Kapazität (C7); ein anderes Ende des sechsten Widerstands (R7) verbunden ist mit einem anderen Ende der vierten Kapazität (C7) und einer Kathode der zweiten Diode (D5); ein anderes Ende der Primärspule des Transformators (T1) verbunden ist mit der vierten Kapazität (C7);
dass ein Ende einer ersten Sekundärspule des Transformators (T1) verbunden ist mit einer Anode einer dritten Diode (D7), und eine Kathode der dritten Diode (D7) verbunden ist mit einem positiven Pol einer fünften Kapazität (C5); ein anderes Ende der ersten Sekundärspule des Transformators (T1) verbunden ist mit einem negativen Pol der fünften Kapazität (C5); ein zweites Ende der zweiten Sekundärspule des Transformators (T1) verbunden ist mit einem Ende einer sechsten Kapazität (CY1) und der Schaltkreismasse (GND), und ein anderes Ende der sechsten Kapazität (CY1) verbunden ist mit dem negativen Pol der fünften Kapazität (C5) und der Schaltkreismasse (GND);
wobei ein zweiter Stift (2) des zweiten einzelnen Chip (IC2) verbunden ist mit einem Ende eines siebten Widerstands (R10), ein dritter Stift (3) des zweiten einzelnen Chip (IC2) verbunden ist mit einem Ende eines achten Widerstands (R12), ein vierter Stift (4) des zweiten einzelnen Chip (IC2) verbunden ist mit einem Ende eines Tastschalters (MS) und einem Ende eines neunten Widerstands (R14), das andere Ende des siebten Widerstands (R10) verbunden ist mit der Basis einer vierten Triode (Q4), der Emitter der vierten Triode (Q4) verbunden ist mit der Schaltkreismasse (GND), der Kollektor der vierten Triode (Q4) verbunden ist mit dem Kollektor einer zweiten Triode (Q2), das andere Ende des achten Widerstands (R12) verbunden ist mit der Basis einer dritten Triode (Q3), der Emitter der dritten Triode (Q3) verbunden ist mit der Schaltkreismasse (GND), der Kollektor der dritten Triode (Q3) verbunden ist mit dem Kollektor der ersten Triode (Q1), der Emitter der ersten Triode (Q1) verbunden ist mit einem Ende eines zehnten Widerstands (R8);
wobei ein anderes Ende des zehnten Widerstands (R8) verbunden ist mit der Kathode einer spannungsstabilisierenden Diode (ZD1) und einem positiven Pol einer siebten Kapazität (C6), die Anode der spannungsstabilisierenden Diode (ZD1) verbunden ist mit der Schaltkreismasse (GND), und der negative Pol der siebten Kapazität (C6) verbunden ist mit der Schaltkreismasse (GND);
wobei der Emitter der ersten Triode (Q1) verbunden ist mit dem Emitter der zweiten Triode (Q2), die Basis der ersten Triode (Q1) verbunden ist mit einem Ende eines elften Widerstands (R11), das andere Ende des elften Widerstands (R11) verbunden ist mit dem Kollektor der vierten Triode (Q4) und verbunden ist mit einer ersten Schnittstelle (Port), die Basis der zweiten Triode (Q2) verbunden ist mit einem Ende eines zwölften Widerstands (R13), und ein anderes Ende des zwölften Widerstands (R13) verbunden ist mit dem Kollektor der dritten Triode (Q3) und verbunden ist mit einer zweiten Schnittstelle (Port);
wobei die LED-Lampenkette (200) gebildet ist durch paralleles Verbinden einer Gruppe von LED-Zweigkreisen, und für jede Gruppe der LED-Zweigkreise eine LED vorgesehen ist;
oder wobei die LED-Lampenkette (200) gebildet ist durch serielles Verbinden einer Gruppe von LED-Zweigkreisen, und jede Gruppe der LED-Zweigkreise aus einer Gruppe von parallelen LEDs zusammengesetzt ist.

2. Das elektronische transformatorgesteuerte Zweidraht-LED-Lampensystem nach Anspruch 1, wobei der Ausgabefunktionssteuerkreis (700) auch einen dritten einzelnen Chip (IC3) umfasst, der erste (1) bis vierte (4) Stift und der siebte Stift (7) des dritten einzelnen Chip (IC3) verbunden ist mit der Schaltkreismasse (GND), der fünfte Stift (5) des dritten einzelnen Chip (IC3) verbunden ist mit dem fünften Stift (5) des zweiten einzelnen Chip (IC2), der sechste Stift (6) des dritten einzelnen Chip (IC3) verbunden ist mit dem sechsten Stift (6) des zweiten einzelnen Chip (IC2), der achte Stift (8) des dritten einzelnen Chip (IC3) verbunden ist mit dem anderen Ende des dritten Widerstands (R16) und dem ersten Stift (1) des zweiten einzelnen Chip (IC2).

3. Das elektronische transformatorgesteuerte Zweidraht-LED-Lampensystem nach Anspruch 1, wobei der Vollbrücken-Gleichrichtungskreis (400) gebildet ist durch Verbinden von vier Silizium-Gleichrichterdioden (D1-D4), das Phasenleiterende (L) und das Nullleiterende (N) einer 100 V bis 240 V Wechselstromleistungsversorgung verbunden sind mit dem WechselstromEingangsende des Vollbrücken-Gleichrichtungskreises, der zusammengesetzt ist mit den vier Silizium-Gleichrichterdioden (D1-D4), der positive Pol des Gleichstrom-Ausgabeendes des Vollbrücken-Gleichrichtungskreises verbunden ist mit dem positiven Pol des Schaltkreises, und der negative Pol des Ausgabeendes des Vollbrücken-Gleichrichtungskreises verbunden ist mit der Schaltkreismasse (GND);
und wobei der Filterkreis (5) zusammengesetzt ist aus der achten Kapazität (C1), einer Induktivität (L1) und der dritten Kapazität (C2), der positive Pol der achten Kapazität (C1) und der Eingangsanschluss der Induktivität (L1) verbunden sind mit dem positiven Pol des Gleichstrom-Ausgabeendes des Vollbrücken-Gleichrichtungskreises, der negative Pol der achten Kapazität (C1) verbunden ist mit der Schaltkreismasse (GND), das Ausgangsende der Induktivität (L1) verbunden ist mit dem positiven Pol der dritten Kapazität (C2), und der negative Pol der dritten Kapazität (C2) verbunden ist mit der Schaltkreismasse (GND).

4. Das elektronische transformatorgesteuerte Zweidraht-LED-Lampensystem nach Anspruch 3, wobei ein Thermistor (F1) verbunden ist mit dem Phasenleiterende (L) des Wechselstromnetzteils (300) und dem Wechselstromeingangsende des Vollbrücken-Gleichrichtungskreises.

## Revendications

1. Système de guirlande de lampe électroluminescente DEL commandé par transformateur électronique comprenant un boîtier de commande (100) et une guirlande de lampe DEL à deux fils (200), dans lequel une prise (100a) est disposée sur le boîtier de commande (100), un contrôleur électronique est disposé dans le boîtier de commande (100) et deux fils sont sortis du contrôleur électronique et connectés à ladite guirlande de lampe DEL (200) ;
le contrôleur électronique comprend une alimentation électrique à courant alternatif (300), un circuit de redressement à pont complet (400), un circuit de filtre (500), un circuit de sortie abaisseur (600) et un circuit de commande de fonction de sortie (700),
dans lequel le circuit de sortie abaisseur (600) comprend une première puce individuelle (IC1) et un transformateur (T1), une première broche (1) de la première puce individuelle (IC1) est connectée avec une masse du circuit (GND), une seconde broche (2) de la première puce individuelle (IC1) est connectée avec une extrémité d'une première résistance (R2) et un émetteur d'une première triode (Q1), une troisième broche (3) de la première puce individuelle (IC1) est connectée avec la base de la première triode (Q1), une cinquième broche (5) de la première puce individuelle (IC1) est connectée avec une extrémité d'un premier condensateur (C4) et une sixième broche (6) de la première puce individuelle (IC1) est connectée avec le pôle positif d'un second condensateur (C3) ; le pôle négatif du second condensateur (C3) est connecté avec la masse du circuit (GND) ; et une cathode d'une première diode (D6) est connectée avec le pôle positif du second condensateur (C3) ; l'autre extrémité de la première résistance (R2) est connectée avec la masse du circuit (GND) ; une extrémité d'une seconde résistance (R1) est connectée avec le pôle positif du second condensateur (C3), une anode d'une seconde diode (D5) est connectée avec une extrémité d'une bobine primaire du transformateur (T1), une première extrémité d'une seconde bobine secondaire du transformateur (T1) est connectée avec une anode de ladite première diode (D6) ;
le circuit de commande de fonction de sortie (700) comprend une seconde puce individuelle (IC2), dans lequel une extrémité d'une troisième résistance (R16) est connectée avec une cinquième broche (5) de la seconde puce individuelle (IC2) ; une huitième broche (8) de la seconde puce individuelle (IC2) est connectée avec la masse du circuit (GND),
**caractérisé en ce que**
ladite guirlande de lampe DEL(200) est une guirlande de lampe DEL bidirectionnelle ; et dans lequel le système de lampe DEL commandé par un transformateur électronique comprend en outre
une quatrième broche (4) de ladite première puce individuelle (IC1) est connectée à une extrémité de chacune d'une quatrième résistance (R3) et une cinquième résistance (R4) ; une autre extrémité dudit premier condensateur (C4) est connectée à une autre extrémité de ladite cinquième résistance (R4) et connectée à ladite masse du circuit (GND) ; une autre extrémité de ladite quatrième résistance (R3) est connectée à ladite anode de ladite première diode (D6) ;
une autre extrémité de ladite seconde résistance (R1) est connectée à un pôle positif d'un troisième condensateur (C2) ; une extrémité d'une sixième résistance (R7) est connectée à un pôle positif d'un troisième condensateur (C2) et une extrémité d'un quatrième condensateur (C7) ; une extrémité de ladite sixième résistance (R7) est connectée à une autre extrémité dudit quatrième condensateur (C7) et une cathode de ladite seconde diode (D5) ; une extrémité de ladite bobine primaire dudit transformateur (T1) est connectée audit quatrième condensateur (C7) ;
une extrémité d'une première bobine secondaire dudit transformateur (T1) est connectée à une anode d'une troisième diode (D7) et une cathode de ladite troisième diode (D7) est connectée à un pôle positif d'un cinquième condensateur (C5) ; une autre extrémité de ladite première bobine secondaire dudit transformateur (T1) est connectée à un pôle négatif dudit cinquième condensateur (C5) ; une seconde extrémité de ladite seconde bobine secondaires dudit transformateur (T1) est connectée à une extrémité d'un sixième condensateur (CY1) et à ladite masse du circuit (GND) et une autre extrémité dudit sixième condensateur (CY1) est connectée audit pôle négatif dudit cinquième condensateur (C5) et à ladite masse du circuit (GND) ;
dans lequel une seconde broche (2) de la seconde puce individuelle (IC2) est connectés à une extrémité d'une septième résistance (R10), une troisième broche (3) de la seconde puce individuelle (IC2) est connectée à une extrémité d'une huitième résistance (R12), une quatrième broche (4) de la seconde puce individuelle (IC2) est connectée à une extrémité d'un interrupteur à clé (MS) et une extrémité d'une neuvième résistance (R14), l'autre extrémité de la septième résistance (R10) est connectée à la base d'une quatrième triode (Q4), l'émetteur de la quatrième triode (Q4) est connecté à la masse du circuit (GND), le collecteur de la quatrième triode (Q4) est connecté au collecteur d'une seconde triode (Q2), l'autre extrémité de la huitième résistance (R12) est connectée à la base d'une troisième triode (Q3), l'émetteur de la troisième triode (Q3) est connecté à la masse du circuit (GND), le collecteur de la troisième triode (Q3) est connecté au collecteur de la première triode (Q1), l'émetteur de la première triode (Q1) est connecté à une extrémité d'une dixième résistance (R8) ;
dans lequel une autre extrémité de la dixième résistance (R8) est connectée à la cathode d'une diode de stabilisation de tension (ZD1) et un pôle positif d'un septième condensateur (C6), l'anode de la diode de stabilisation de tension (ZD1) est connectée à la masse du circuit (GND) et le pôle négatif du septième condensateur (C6) est connecté à la masse du circuit (GND) ;
dans lequel l'émetteur de la première triode (Q1) est connecté à l'émetteur de la seconde triode (Q2), la base de la première triode (Q1) est connectée à une extrémité d'une onzième résistance (R11), l'autre extrémité de la onzième résistance (R11) est connectée au collecteur de la quatrième triode (Q4) et connectée à une première interface (Port), la base de la seconde triode (Q2) est connectée à une extrémité d'une douzième résistance (R13) et une autre extrémité de la douzième résistance (R13) est connectée au collecteur de la troisième triode (Q3) et connectée avec une seconde interface (Port) ;
dans lequel la guirlande de lampe DEL (200) est formée en connectant un groupe de circuits de branche de DEL en parallèle et chaque groupe des circuits de branche DEL est pourvu d'une DEL ;
ou dans lequel la guirlande de lampe DEL (200) est formée en connectant un groupe de circuits de branche DEL en série et chaque groupe de circuits de branche DEL est composé d'un groupe de DELs parallèles.

2. Système de guirlande de lampe électroluminescente DEL à deux fils commandé par transformateur électronique selon la revendication 1, dans lequel le circuit de commande de fonction de sortie (700) comprend aussi une troisième puce individuelle (IC3), la première (1) à la quatrième (4) broche et la septième broche (7) de la troisième puce individuelle (IC3) sont connectées à la masse du circuit (GND), la cinquième broche (5) de la troisième puce individuelle (IC3) est connectée à la cinquième broche (5) de la seconde puce individuelle (IC2), la sixième broche (6) de la troisième puce individuelle (IC3) est connectée à la sixième broche (6) de la seconde puce individuelle (IC2), la huitième broche (8) de la troisième puce individuelle (IC3) est connectée à l'autre extrémité de la troisième résistance (R16) et à la première broche (1) de la seconde puce individuelle (IC2).

3. Système de guirlande de lampe électroluminescente DEL à deux fils commandé par transformateur électronique selon la revendication 1, dans lequel le circuit de redressement à pont complet (400) est formé en connectant quatre diodes de redressement en silicium (D1-D4), l'extrémité de ligne sous tension (L) et l'extrémité de ligne hors tension (N) d'une alimentation électrique à courant alternatif de 100 V à 240 V sont connectées à l'extrémité d'entrée à courant alternatif du circuit de redressement à pont complet composé de quatre diodes de redressement en silicium (D1-D4), le pôle positif de l'extrémité de sortie à courant direct du circuit de redressement à pont complet est connecté au pôle positif du circuit et le pôle négatif de l'extrémité de sortie du circuit de redressement à pont complet est connecté à la masse du circuit (GND) ;
et dans lequel le circuit de filtre (5) est composé du huitième condensateur (C1), un réacteur (L1) et le troisième condensateur (C2), le pôle positif du second condensateur (C1) et la borne entrante du réacteur (L1) sont connectés au pôle positif de l'extrémité de sortie à courant direct du circuit de redressement à pont complet, le pôle négatif du huitième condensateur (C1) est connecté à la masse du circuit (GND), l'extrémité de sortie du réacteur (L1) est connecté au pôle positif de troisième condensateur (C2) et le pôle négatif du troisième condensateur (C2) est connecté à la masse du circuit (GND).

4. Système de guirlande de lampe électroluminescente DEL à deux fils commandé par transformateur électronique selon la revendication 3, dans lequel un thermistor (F1) est connecté à l'extrémité de ligne sous tension (L) de l'alimentation électrique à courant alternatif (300) et à l'extrémité d'entrée de courant alternatif du circuit de redressement à pont complet.
